# EUROPÄISCHE PATENTSCHRIFT

(11) **EP 3 627 626 B1**
(45) Veröffentlichungstag und Bekanntmachung des Hinweises auf die Patenterteilung: **16.02.2022**
(21) Anmeldenummer: 18195153.4
(22) Anmeldetag: 18.09.2018
(51) Int. Cl.: H01R 11/09, H01R 4/64, H02G 3/16

(54) **KONTAKTELEMENT**
CONTACT ELEMENT
ÉLEMENT DE CONTACT

(43) Veröffentlichungstag der Anmeldung: 25.03.2020
(73) Patentinhaber: Gustav Hensel GmbH & Co. KG, 57368 Lennestadt (DE)
(72) Erfinder: HILTENKAMP, Bernd Andreas, 57399 Kirchhundem (DE); KLIMASCHKA, Christian, 57074 Siegen (DE); KNOL, Ullrich, 57439 Attendorn (DE); SONNTAG, Maren, 57399 Kirchhundern (DE)
(74) Vertreter: Brinkmann & Partner

(56) Entgegenhaltungen:
- EP-A1- 3 032 652
- GB-A- 2 232 828
- GB-A- 2 263 826
- JP-A- 2007 330 044
- JP-A- 2015 226 370
- US-A1- 2013 292 156
- US-A1- 2018 083 375
- US-A1- 2018 241 188

## Beschreibung

Die vorliegende Erfindung betrifft ein Kontaktelement zur elektrischen Kontaktierung von Kabelverschraubungen für z.B. stahlarmierte Kabel.

Stahlarmierte Kabel sind im Stand der Technik bekannt. Darunter versteht man vorzugsweise im angelsächsischen Raum verwendete Leiter. Der Aufbau umfasst eine Gruppe von Leitern im Inneren eines im Wesentlichen runden Kabels. Die Leiter sind jeweils für sich ummantelt. So können drei oder vier Leiter, je nach Aufgabe auch mehr, im Inneren eines Kabels angeordnet sein. Die Leiter selbst können einadrig oder vieladrig sein. Diese Leiter ist für sich genommen durch eine Ummantelung isoliert. Eine Vielzahl von Leitern sind in einen Kern eingebettet. Dieser Kern wiederum ist von einer Vielzahl von Stahldrähten umgeben, die dieses Kabel armieren. Außen herum ist wiederum eine äußere isolierende Hülle angeordnet.

Derartige stahlarmierte Kabel werden beispielsweise zum Aufbau elektrischer Leitungssysteme in Gebäuden und dergleichen eingesetzt. Dabei übernimmt die Stahlarmierung in aller Regel die Funktion des Schutzleiters oder einer Abschirmung, die ihrerseits geerdet oder sonst wie kontaktiert ist.

Führt man derartige stahlarmierte Kabel beispielsweise in Verteilerdosen, Sicherungskästen, Gehäusen, und dergleichen ein, so ist es bekannt, hierfür besondere Verschraubungen zu verwenden. Derartige Kabelverschraubungen sind ihrerseits in der Regel aus Metall (teilweise auch Kunststoffummantelt) gebildet. Im Allgemeinen dienen zwei miteinander verschraubbare Elemente oder Teile der Kabelverschraubung zur Durchführung eines stahlarmierten Kabels. Dabei wird ein Element oder Teil im Inneren eines Gehäuses, das bzw. der andere im Äußeren eines Gehäuses angesetzt und über ein Durchgangsloch in der Gehäusewand miteinander verbunden und verschraubt. Dabei wird in der Regel ein Kontaktkörper verwendet, um sicherzustellen, dass eine im inneren der Kabelverschraubung kontaktierte Stahlarmierung mit den zwischengelegten metallischen Verschraubungsösen elektrisch verbunden wird. Die Gehäuse weisen dafür vorgesehene Durchführungsstellen auf, die beispielsweise mit leicht durchstoßbaren Abdeckungen versehen sind. Dies können elastische Kunststoffverschlüsse sein.

Im Stand der Technik ist es bekannt, bei der Einführung von stahlarmierten Kabel in Verteiler-/ Abzweigkästen, Sicherungskästen, Gehäusen, und dergleichen Kontaktringe zu verwenden, die zwischen den zu verschraubenden Hülsen angesetzt werden und auf diese Weise in direkter elektrischer Verbindung zur Stahlarmierung gebracht werden. Diese Kontaktringe sind dann beispielsweise mit einem Leitungskabel verbunden, welches mit seinem freien Ende dann zum Beispiel mit dem elektrischen Schutzleiter oder der gewünschten Kontaktstelle verbunden wird.

Auch wenn die Erfindung in Bezug auf Kabelverschraubungen der genannten Art beschrieben wird, ist sie auch im Zusammenhang mit improvisierten Verbindungen an Kabeldurchführungen zu verstehen und einzusetzen, wobei in der Regel ein Teil einer Stahlarmierung aufgeweitet und mit metallischen Elementen in der Umrandung einer Durchführung kontaktiert wird.

Es ist offensichtlich, dass die aus dem Stand der Technik bekannte Kontaktierungsmethode einen erheblichen Aufwand an Montagevorbereitung und während der Montage bedeutet. Kontaktierungselemente müssen im Bereich von Durchführungen positioniert und in die Verschraubungen eingebracht werden. Weiterhin müssen diese vorher oder nachher mit Leitern verbunden werden, um die Durchführungen stimmungsgemäß zu kontaktieren.

Aus dem Stand der Technik sind verschiedene Kontaktelemente bekannt. So offenbart die US 2018/0083375 A1 ein gattungsgemäßes Kontaktelement in Form eines Bleches mit zwei dazu rechtwinklig angeordneten Schenkeln, in denen jeweils eine Bohrung angeordnet ist. Eine alternative Ausgestaltung weist ein weiteres L-förmiges Element mit einem Schenkel auf, in dem eine weitere Bohrung angeordnet ist.

Die GB 2 232 828 A offenbart eine Abzweigdose mit mehreren Öffnungen für den Eintritt von Kabeln, wobei jede Öffnung mit einem, eine Außenwand durchgreifenden hohlzylindrischen Gewindestutzen ausgebildet ist. Jeder Gewindestutzen ist mit einer zweiteiligen Klammer umgeben, die untereinander elektrisch miteinander verbunden sind. Die elektrische Verbindung der Klammern dient der elektrischen Erdung.

Ein weiteres Erdungs-Kontaktelement ist aus der GB 2 263 826 A bekannt. Dieses Kontaktelement ist kreuzförmig ausgebildet und weist Langlöcher für den Durchgriff einer Schraubverbindung mit einem Ringelement auf.

Aus der JP 2015 226370 A ist ein s-förmiges Kontaktelement mit einem Kontaktdraht bekannt.

Weiterhin ist aus der US 2018/0241188 A1 eine Abzweigdose mit einem daran schwenkbar angeordneten Deckel bekannt.

Ferner ist aus der JP 2007 330044 A ein Verbindungsgehäuse für Hochvoltanwendungen für eine Verkabelung in einem Bussystem bekannt.

Schließlich offenbart die US 2013/0292156 A1 verschiedene Kontaktelemente für elektrische Bussysteme.

Ausgehend vom vorgeschriebenen Stand der Technik liegt der Erfindung die Aufgabe zugrunde, ein Kontaktelement bereitzustellen, mit welchem Vormontage und Durchführungsmontage erheblich vereinfacht und verbessert werden.

Zur technischen **Lösung** dieser Aufgabe wird ein Kontaktelement mit den Merkmalen des Anspruches 1 vorgeschlagen. Weitere Vorteile und Merkmale ergeben sich aus den Unteransprüchen.

Erfindungsgemäß ist vorgesehen, dass eine Mehrzahl von Ringelementen, also wenigstens zwei, mit Leiterbahnen verbunden sind, wobei die elektrisch miteinander verbundenen Ringelemente durch die streifenförmig ausgebildete Leiterbahnen relativ zueinander in vorgegebenen geometrischen Positionen angeordnet sind und Knickstellen und Bereiche zur Aufnahme mechanischer Spannungen aufweisen und wobei das Kontaktelement als einstückiges Formteil ausgebildet ist.

Die Ringelemente sind mit den Leitungselementen/Leiterbahnen fest verbunden. Die Leiterbahnen sind als eigensteife Elemente ausgebildet. Auf diese Weise lassen sich Leiterbahnen mit daran angeordneten Ringelementen zu Gebinden zusammenzufassen, sodass die Ringelemente eine feste geometrische Position relativ zueinander einnehmen und behalten.

Dabei ist die Verbindung zwischen Ringelementen und Leiterbahnen so ausgelegt sein, dass mechanische Spannungen aufgenommen werden können, ohne dass dabei grundsätzlich die Positionierung verändert wird. Dies erfolgt bei mechanischen Spannungen in geringem Rahmen, jedoch ist die Verbindung nicht bestimmungsgemäß weich. Eine oder mehrere Positionen zur Aufnahme von mechanischen Belastungen und Spannungen können an beliebigen Stellen der Leiterbahnen angeordnet sein und müssen nicht zwingend in der direkten Verbindungsstelle zwischen Leiterbahnen und Ringelement ausgebildet sein.

Durch die Erfindung ist es möglich, eine Vielzahl von Leiterbahnen in einem einstückigen, im Wesentlichen plattenförmigen Element auszubilden, welches Biegungen aufweist und Konturen, die geeignet sind, die an den Enden angeordneten Ringelemente an vorgegebenen Positionen zu halten.

Leiterbahnen und Ringelemente können aus dem gleichen Material gebildet sein, beispielweise aus einem Stahlblech, einer kaschierten Folie, einem metallisierten Träger oder dergleichen.

An einer oder mehreren Stellen der Leiterbahnen können Kontaktstellen ausgebildet sein, um eine elektrische Kontaktierung des erfindungsgemäßen Kontaktelementes zu ermöglichen.

Die geometrischen Positionen der Ringelemente entsprechen den vorgesehenen Kabeldurchführungen eines vorgegebenen Verteiler-/ Abzweigkastens, eines Sicherungskastens oder eines Gehäuses.

Es kann auch vorgesehen sein, dass Ringelemente an verschiedenen Stellen einer Leiterbahnplatte lösbar angeordnet sind, beispielsweise durch aufschrauben. Auf diese Weise ist es möglich, Leiterbahnplatten unterschiedlich zu bestücken und für unterschiedliche Gehäuse einzusetzen.

Die Positionierung der Ringelemente zueinander kann dadurch ermöglicht werden, dass die Leiterbahnen als eigensteife Elemente ausgebildet sind. Dieser Effekt kann jedoch auch durch andere Aufbauten realisiert werden, insbesondere durch die Kombination von steifen Elementen.

Mit der Erfindung wird ein einfach aufbaubares Kontaktelement vorgeschlagen, mit welchem stahlarmierte Kabel auf einfache Weise kontaktiert werden können.

Selbstverständlich können die Leiter oder die Verbindungsstellen biegbar ausgebildet sein. Die Ringelemente können zu einer lichten Öffnung hin mit Kontaktstellen ausgebildet sein, um gegebenenfalls dünnere Leitungen kontaktieren zu können. Diese können kreissegmentartig konzentrisch oder stegartig ausgebildet sein.

Gegenstand der vorliegenden Erfindung ist ferner ein System bestehend aus einem Verteiler/- Abzweigkasten mit Kabeldurchführungsöffnungen und einem Kontaktelement mit Ringelementen und eigenstabilen Leiterbahnen, welche Ringelemente mit den Leiterbahnen derart verbunden sind, dass diese eine feste relative Position zueinander einnehmen, wobei die Positionen so vorbestimmt sind, dass beim Einsetzen des Kontaktelementes in den Verteiler-/ Abzweigkasten Ringelemente an vorgesehenen Kabeldurchführungsöffnungen des Verteiler-/ Abzweigkastens positioniert sind.

Bei diesem System ist vorgesehen, dass die Leiterbahnen derart ausgebildet sind, dass sie ohne Behinderung von Befestigungsstellen und Montagestellen in den Verteiler-/ Abzweigkasten einsetzbar und dort befestigbar sind. Die Leiterbahnen sind derart geführt, dass an ihrem freien Enden Ringelemente angeordnet sind, welche beim bestimmungsgemäßen Einsetzen des Kontaktelementes in den Verteiler-/ Abzweigkasten im Bereich von Durchführungsöffnungen des Verteiler-/ Abzweigkastens angeordnet sind.

Die Ringelemente können ein äußeres Ringelement aufweisen, welches durch konzentrisch angeordnete Ringelemente oder Ringsegmente nach innen ausgefüllt ist, welche Ringelemente beziehungsweise Ringsegmente über Stege mit dem äußeren Ringelement verbunden sind. Auf diese Weise kann das Ringelement an verschiedene Kabeldurchmesser ohne zusätzliche Mittel angepasst werden. Die Ringsegmente können beispielsweise die Form eines C aufweisen, welches über einen Steg mit dem Ringelement verbunden ist, wobei mehrere Ringsegmente konzentrisch zueinander zur Mitte des Ringelementes verlaufend angeordnet sind.

Weitere Vorteile und Merkmale ergeben sich aus der folgenden Beschreibung anhand der Figuren. Dabei zeigen:

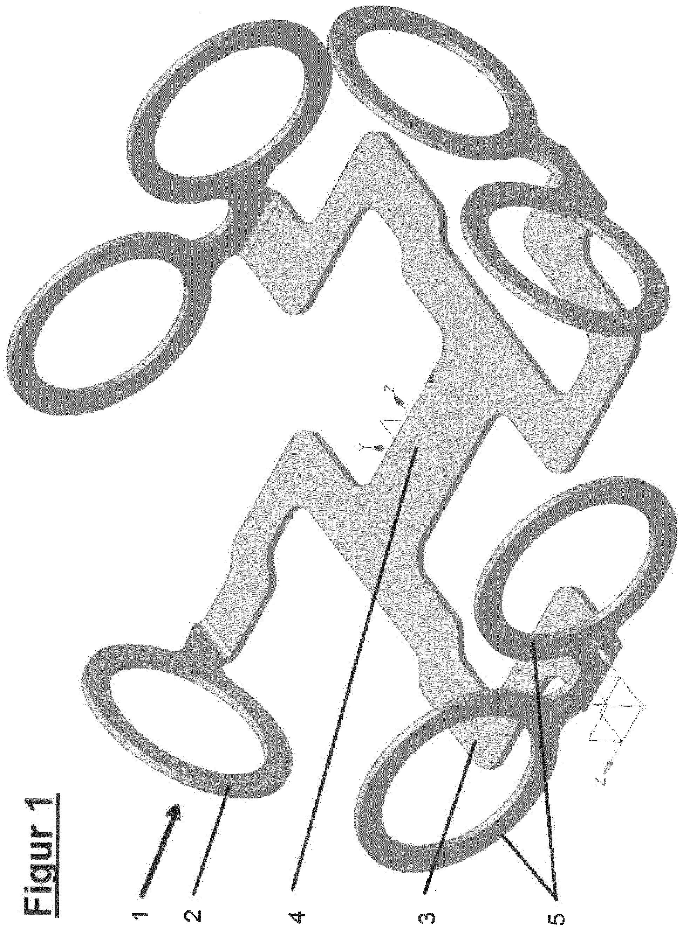

- Fig. 1: eine beispielhafte Ausführungsform ein erfindungsgemäßes Kontaktelement und
- Fig. 2: eine Ansicht des Einsatzes des Kontaktelementes gemäß Fig. 1 in einem Verteiler-/ Abzweigkasten.

In den Figuren sind gleiche Elemente mit gleichen Bezugszeichen versehen.

Die Figuren zeigen ein Kontaktelement 1. Dieses weist eine Vielzahl von Ringelementen 2 auf . Dabei sind einige Ringelemente 2 paarweise angeordnet, sodass sich Paare 5 ergeben.

Alle Ringelemente 2 und Paare 5 sind mit einer Leiterbahn 3 verbunden, welche plattenförmig ausgebildet ist. Diese Leiterbahn 3r weist eine zentrale Kontaktierungsstelle 4 auf.

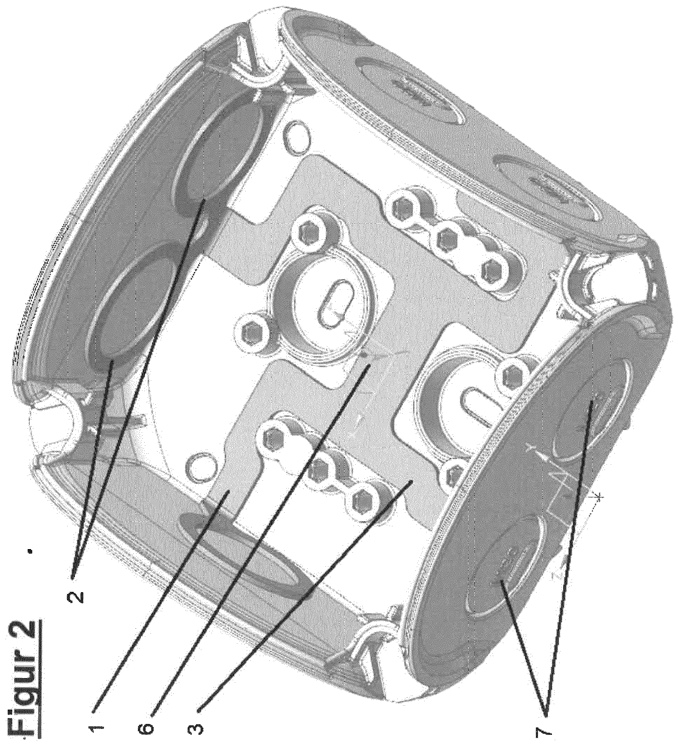

Wie die Fig. 2 zeigt sind die Positionen der Ringelemente 2 in Übereinstimmung mit Durchführungsöffnungen 7 eines beispielhaften Verteiler-/ Abzweigkastens angeordnet, der eine zentrale Kontaktierungsstelle 6 aufweist, die mit der Kontaktierungsstelle 4 der Leiterbahn 3 übereinstimmt.

Es zeigt sich, dass das Kontaktelement 1 auf einfachste Weise in einem vorbekannten Verteiler-/ Abzweiggehäuse angeordnet werden kann, sodass die Öffnungen für die Kontaktierung bei der Durchführung stahlarmierter Kabel vorbereitet sind.

### Bezugszeichen

- 1: Kontaktelement
- 2: Ringelement
- 3: Leiter
- 4: Kontaktstelle
- 5: Ringpaar
- 6: Kontaktierung
- 7: Durchführungsöffnung

## Patentansprüche

1. Kontaktelement (1) zur elektrischen Kontaktierung eines Leiters in Kabelverschraubungen für armierte Kabel, umfassend ein metallisches Ringelement (2), welches mit einer Leiterbahn (3) verbunden ist,wobei die Leiterbahn (3) elektrisch leitend mit wenigstens einer weiteren Leiterbahn (3) und darüber hinaus mit einem weiteren metallischen Ringelement (2) verbunden ist, wobei die elektrisch miteinander verbundenen Ringelemente (2) durch die Leiterbahnen (3) relativ zueinander in vorgegebenen geometrischen Positionen angeordnet sind, wobei die Leiterbahnen streifenförmig ausgebildet sind und Knickstellen und Bereiche zur Aufnahme mechanischer Spannungen aufweisen und wobei das Kontaktelement (1) als einstückiges Formteil ausgebildet ist.

2. Kontaktelement nach Anspruch 1, **dadurch gekennzeichnet, dass** wenigstens ein Ringelement (2) konzentrisch angeordnete Ringe aufweist.

3. Kontaktelement nach einem der vorhergehenden Ansprüche, **dadurch gekennzeichnet, dass** wenigstens ein Ringelement (2) konzentrisch angeordnete Ringsegmente aufweist.

4. Kontaktelement nach einem der vorhergehenden Ansprüche, **dadurch gekennzeichnet, dass** die geometrischen Positionen der Ringelemente (2) den Kabeldurchführungen eines Abzweigkastens entsprechen.

5. Kontaktelement nach einem der vorhergehenden Ansprüche, **dadurch gekennzeichnet, dass** die Leiterbahnen (3) wenigstens eine elektrische Anschlussstelle aufweisen.

6. System bestehend aus einem Verteiler-/Abzweigkasten mit Kabeldurchführungsöffnungen (7) und einem Kontaktelement (1) nach einem der Ansprüche 1 bis 5 mit Ringelementen (2) und eigenstabilen Leiterbahnen (3), welche Ringelemente (2) mit den Leiterbahnen (3) derart verbunden sind, dass diese eine feste relative Position zueinander einnehmen, wobei die Position so vorbestimmt ist, dass bei einem Einsetzen des Kontaktelements (1) in den Verteiler-/Abzweigkasten Ringelemente (2) an vorgesehenen Kabeldurchführungsöffnungen (7) des Verteiler- /Abzweigkastens positioniert sind.

## Claims

1. Contact element (1) for electrically contacting a conductor in cable glands for armored cables, comprising a metallic ring element (2) which is connected to a conductor track (3), the conductor track (3) being electrically conductively connected to at least one further conductor track (3) and, in addition, to a further metallic ring element (2), wherein the electrically interconnected ring elements (2) are arranged in predetermined geometrical positions relative to one another by means of the conductor tracks (3), wherein the conductor tracks are designed in strip-shaped and have kinks and regions for absorbing mechanical stresses, and wherein the contact element (1) is designed as a one-piece molded part.

2. Contact element according to claim 1, **characterized in that** at least one ring element (2) has concentrically arranged rings.

3. Contact element according to any of the preceding claims, **characterized in that** at least one ring element (2) has concentrically arranged ring segments.

4. Contact element according to any of the preceding claims, **characterized in that** the geometrical positions of the ring elements (2) correspond to the cable glands of a junction box.

5. Contact element according to any of the preceding claims, **characterized in that** the conductor tracks (3) have at least one electrical connection point.

6. System consisting of a distribution/junction box with cable feed-through openings (7) and a contact element (1) according to any of claims 1 to 5, with ring elements (2) and inherently stable conductor tracks (3), which ring elements (2) are connected to the conductor tracks (3) in such a way such that they assume a fixed position relative to one another, the position being predetermined in such a way that, when the contact element (1) is inserted into the distribution/junction box, ring elements (2) are positioned at provided cable feed-through openings (7) of the distribution/junction box.

## Revendications

1. Élément de contact (1) pour la mise en contact électrique d'un conducteur dans des presse-étoupes pour câbles armés, comprenant un élément annulaire métallique (2) qui est relié à une piste conductrice (3), la piste conductrice (3) étant reliée de manière électriquement conductrice à au moins une autre piste conductrice (3) et en outre à un autre élément annulaire métallique (2), les éléments annulaires (2) reliés électriquement entre eux étant disposés les uns par rapport aux autres par les pistes conductrices (3) dans des positions géométriques prédéfinies, les pistes conductrices étant réalisées en forme de bande et présentant des points de pliage et des zones destinées à absorber des tensions mécaniques, et l'élément de contact (1) étant réalisé sous forme de pièce moulée d'un seul tenant.

2. Élément de contact selon la revendication 1, **caractérisé en ce qu'**au moins un élément annulaire (2) présente des anneaux disposés de manière concentrique.

3. Élément de contact selon l'une quelconque des revendications précédentes, **caractérisé en ce qu'**au moins un élément annulaire (2) présente des segments annulaires disposés de manière concentrique.

4. Élément de contact selon l'une quelconque des revendications précédentes, **caractérisé en ce que** les positions géométriques des éléments annulaires (2) correspondent aux passages de câbles d'une boîte de dérivation.

5. Élément de contact selon l'une quelconque des revendications précédentes, **caractérisé en ce que** les pistes conductrices (3) présentent au moins un point de connexion électrique.

6. Système composé d'une boîte de distribution/dérivation avec des ouvertures de passage de câbles (7) et d'un élément de contact (1) selon l'une des revendications 1 à 5, avec des éléments annulaires (2) et des pistes conductrices (3) autostables, lesquels éléments annulaires (2) sont reliés aux pistes conductrices (3) de telle manière, que ceux-ci occupent une position relative fixe l'un par rapport à l'autre, la position étant prédéterminée de telle sorte que, lors d'une insertion de l'élément de contact (1) dans la boîte de distribution/dérivation, des éléments annulaires (2) sont positionnés au niveau d'ouvertures prévues pour le passage de câbles (7) de la boîte de distribution/dérivation.
